(19) Europäisches Patentamt
European Patent Office
Office européen des brevets

(11) **EP 4 575 686 A1**

(12) **DEMANDE DE BREVET EUROPEEN**

(43) Date de publication:
**25.06.2025 Bulletin 2025/26**

(21) Numéro de dépôt: **24215802.0**

(22) Date de dépôt: **27.11.2024**

(51) Classification Internationale des Brevets (IPC):
**G05B 19/404** *(2006.01)*    **B25J 9/10** *(2006.01)*
**B25J 9/16** *(2006.01)*

(52) Classification Coopérative des Brevets (CPC):
**G05B 19/404;** B25J 9/1694; G05B 2219/40456;
G05B 2219/45059

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **22.12.2023 FR 2314998**

(71) Demandeurs:
• **Airbus Operations (S.A.S.)**
**31060 Toulouse Cedex 9 (FR)**

• **Airbus Operations S.L.**
**28906 Getafe (Madrid) (ES)**

(72) Inventeurs:
• **VAN DAMME, Damien**
**TOULOUSE (FR)**
• **RAMUZAT, Noélie**
**TOULOUSE (FR)**
• **CORREIA POUSAS DE OLIVEIRA, Kledder Hugo**
**GETAFE (ES)**

(74) Mandataire: **Airbus-OPS SAS**
**LLF-M0101/1**
**316, route de Bayonne**
**31060 Toulouse Cedex (FR)**

(54) **PROCEDE DE CONTROLE DE LA POSITION D'UNE TETE PORTE-OUTIL D'UN ROBOT MULTI-AXE ET SYSTEME EXECUTANT LE PROCEDE**

(57) L'invention concerne un procédé amélioré de contrôle de la position d'une tête (1) porte-outil d'un robot multiaxe, notamment utilisé pour des opérations de perçage de pièces d'équipements aéronautiques selon une première direction (Z), le procédé opérant une régulation de la force d'appui de l'outil sur une pièce à usiner selon cette première direction (Z) tout en opérant un asservissement en position de la tête porte-outil (1) selon deux autres directions (X, Y) perpendiculaires entre elles et perpendiculaires chacune à la première direction (Z), à partir d'informations (Se1, Se2, Se3) représentatives de forces orientées selon la première direction (Z) et obtenues depuis trois capteurs distincts (16a, 16b, 16c) ; l'invention concerne également un dispositif contrôleur configuré pour exécuter le procédé de positionnement de ladite tête (1).

Ainsi, il est avantageusement possible d'améliorer la qualité d'opérations d'usinage réalisées par la tête porte-outil portant en outil, en réduisant ou en évitant notamment un glissement d'un outil sur une pièce à usiner.

[Fig. 3]

EP 4 575 686 A1

**Description**

La présente invention concerne un procédé de contrôle de la position d'une tête porte-outil d'un robot multiaxe configuré notamment pour réaliser des opérations de perçage de pièces d'équipements aéronautiques. Au moins un mode de réalisation concerne un asservissement de position d'une tête porte-outil d'un robot multiaxe visant à éviter tout dérapage de l'outil porté par la tête sur la surface d'une pièce à usiner.

Il est connu de réaliser des opérations d'usinage industriel à l'aide de robots multiaxes dans le but d'obtenir une grande cadence d'opérations et un grand niveau de précision et de fiabilité pour la réalisation de ces opérations.

Les demandes de brevet EP3957436 et US2018/361571 décrivent des dispositifs permettant de telles opérations d'usinage industriel à l'aide de robots multiaxes.

De manière générale, de telles opérations, des opérations de perçage, de fraisage, de ponçage, de rivetage et de soudage, par exemple, sont ainsi réalisées grâce à un robot multiaxe pourvu d'une tête porte-outil, parfois appelée « *end-effector* » (de l'anglais et qui signifie « effecteur terminal »). Le contrôle en position de ce type de robot permet d'apporter une grande précision de positionnement et donc une grande précision dans la réalisation des opérations, notamment en régulant la force d'appui de l'outil sur une surface d'une pièce au moyen d'un capteur de contrainte (encore appelé capteur de force, ou encore jauge de contrainte). Il existe cependant des conditions dans lesquelles un outil porté par une tête porte-outil d'un robot multiaxe et opérant une opération d'usinage peut glisser ou déraper sur la surface de la pièce, entraînant alors des imprécisions de résultat, voire des dommages causés à la pièce à usiner. Par exemple, un outil de perçage opérant un alésage selon un axe perpendiculaire à la surface d'une pièce peut dévier légèrement ou glisser et entraîner une erreur de perçage. Il existe donc un besoin de contrôler la répartition des forces sur une tête porte-outil d'un robot multiaxe pour réduire le risque de glissement indésirable d'un outil ou d'une tête porte-outil sur une pièce à usiner.

La situation peut être améliorée.

Un objet de la présente invention est de proposer un procédé de contrôle d'une tête porte-outil d'un robot multiaxe visant à réduire au moins certains des inconvénients de l'art antérieur ainsi qu'un dispositif contrôleur amélioré pour exécuter un tel procédé.

A cet effet, il est proposé un procédé de positionnement d'une tête porte-outil d'un robot multiaxe, tel que revendiqué dans la revendication 1.

Il est ainsi possible de détecter un déséquilibre entre les forces appliquées sur les trois capteurs, de détecter un risque de glissement et donc de prévenir un glissement d'un outil porté par la tête porte-outil sur la surface d'une pièce à usiner.

L'invention concerne également un dispositif contrôleur de la position (ou du positionnement) d'une tête porte-outil d'un robot multiaxe, tel que revendiqué à la revendication 5.

L'invention a également pour objet un produit programme d'ordinateur comprenant des instructions de codes de programme pour exécuter les étapes d'un procédé précédemment décrit, lorsque ledit programme est exécuté par un processeur d'un contrôleur de positionnement d'une tête porte-outil de robot multiaxe, tel que revendiqué à la revendication 9.

L'invention concerne enfin un support de stockage comprenant un produit programme d'ordinateur tel que précité et revendiqué à la revendication 10.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints :

La figure 1 illustre une tête porte-outil d'un robot multiaxe comprenant trois capteurs de contraintes, selon un mode de réalisation de l'invention, lorsqu'un outil porté est positionné en retrait dans la tête porte-outil ;

La figure 2 illustre la tête porte-outil déjà représenté sur la Fig. 1, selon un mode de réalisation, lorsque l'outil est positionné en saillie pour opérer un perçage d'une pièce ;

La figure 3 est un ordinogramme illustrant un procédé de positionnement de la tête porte-outil représentée sur les Fig.1 et Fig.2 comprenant deux asservissements en position de la tête, selon un mode de réalisation ;

La figure 4a est un ordinogramme illustrant des détails d'un premier asservissement en position de la tête porte-outil selon le procédé déjà représenté sur la Fig. 3 ;

La figure 4b est un ordinogramme illustrant des détails d'un deuxième asservissement en position de la tête porte-outil selon le procédé déjà représenté sur la Fig. 3 ; et,

La figure 5 est un diagramme illustrant une architecture interne d'un contrôleur de positionnement de la tête porte-outil représentée sur les Fig. 1 et Fig. 2 configuré pour exécuter un procédé tel qu'illustré sur la Fig. 3.

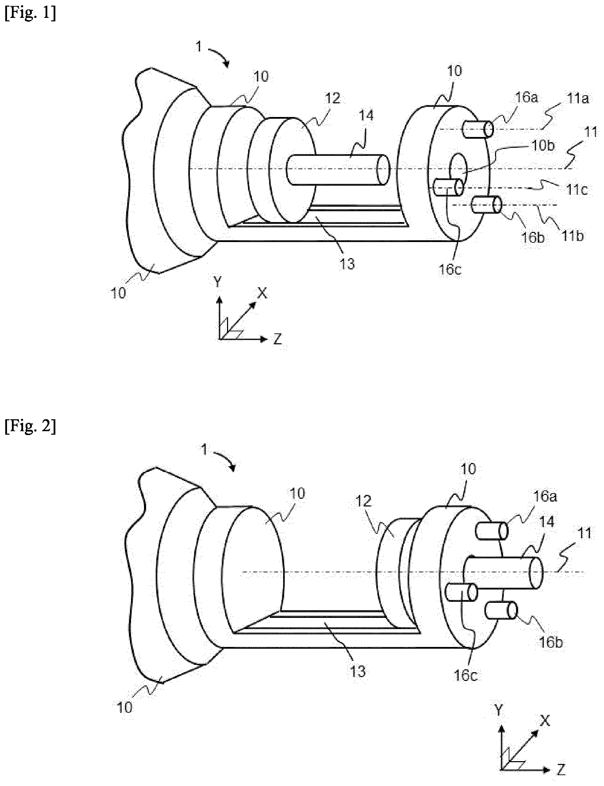

La Fig. 1 représente une tête 1, de type tête porte-outil, d'un robot industriel multiaxe configuré pour opérer notamment des opérations de perçage de pièces d'équipements aéronautiques. Selon un mode de réalisation, le robot auquel est attachée la tête porte-outil 1 est un robot présentant six axes de mouvement. Le positionnement de la tête porte-

**EP 4 575 686 A1**

outil 1 est opéré par un dispositif (ou système) contrôleur en référence à un référentiel orthonormé X, Y, Z. La tête porte-outil 1, encore appelée ici tête 1, comprend un corps 10 dont une partie terminale dite « partie terminale distancielle » présente un alésage 10b traversant configuré pour le passage d'un outil longiforme, par exemple d'un outil de perçage, ou encore pour le passage d'une tige longiforme support d'outil formant partie d'un outil.

Selon l'exemple décrit, la tête 1 comprend un module motorisé 12 dans lequel est inséré un outil de perçage 14 (un foret). Le module motorisé 12 est agencé sur le corps 10 de la tête 1 grâce à une liaison glissière 13 et peut être déplacé en translation le long de cette liaison glissière 13 à l'aide d'un moteur (non représenté sur la figure). Le module motorisé 12 comprend en outre un moteur d'entraînement en rotation (non représenté sur la figure) de l'outil 14. Une translation de l'ensemble que composent le module motorisée 12 et l'outil 14 s'effectue selon un axe 11. L'axe 11 est un axe longitudinal de la tête 1, parallèle à la direction Z du référentiel X, Y, Z et est en outre l'axe longitudinal suivant lequel est agencé l'alésage 10b dans la partie terminale distancielle du corps 10. Avantageusement, la partie terminale distancielle du corps 10 de la tête 1 comprend au moins trois capteurs de contraintes 16a, 16b et 16c agencés dans un même plan, avec une implantation décrivant un triangle, respectivement orientés selon des axes 11a, 11b et 11c, parallèles à l'axe 11, et configurés chacun pour délivrer à un dispositif contrôleur distant des informations représentatives de contraintes (forces) mesurées et appliquées selon une direction parallèle à son axe longitudinal. En d'autres termes, le capteur 16a est configuré pour délivrer des informations Se1 représentatives de contraintes qui lui sont appliquées selon l'axe 11a, le capteur 16b est configuré pour délivrer des informations Se2 représentatives de contraintes qui lui sont appliquées selon l'axe 11b et le capteur 16c est configuré pour délivrer des informations Se3 représentatives de contraintes qui lui sont appliquées selon l'axe 11c. En d'autres termes encore, chacun des capteurs 16a, 16b et 16c est configuré pour délivrer des informations représentatives de contraintes qui lui sont appliquées selon une direction parallèle à l'axe 11, donc selon la direction Z du référentiel X, Y, Z. Dans la présente description, le terme « contrainte » désigne une composante d'une force mécanique déterminée suivant un axe prédéfini. Ainsi les termes « contrainte selon un axe » et « force selon un axe » sont équivalents entre eux.

Avantageusement, les capteurs 16a, 16b et 16c sont agencés de sorte à ne pas former un alignement. Selon un mode de réalisation, les capteurs 16a, 16b et 16c sont agencés à égale distance de l'axe 11, dans un même plan, et de sorte que l'angle que forment deux capteurs voisins l'un de l'autre avec l'intersection de l'axe 11 et de ce plan soit un angle de 120°. Un tel agencement des capteurs 16a, 16b et 16c permet de détecter un déséquilibre entre les forces mesurées par chacun des capteurs quand la partie terminale distancielle du corps 10 est approchée d'une pièce à usiner de sorte que les extrémités des capteurs 16a, 16b et 16c soient en contact avec cette pièce à usiner. Selon un tel agencement, et lorsque l'axe 11 est positionné perpendiculairement à la surface d'une pièce à usiner, en regard d'un point ciblé de cette surface (par exemple le centre d'un trou de perçage à réaliser) et en l'absence de glissement, les contraintes respectivement mesurées par les capteurs 16a, 16b et 16c sont égales entre elles ou sensiblement égales entre elles (à une marge d'erreur près, jugée acceptable). Une telle configuration de la tête 1 permet d'opérer un appui de la tête sur une pièce à usiner, via les trois capteurs 16a, 16b et 16c opérant comme des pions d'appui, puis à amener progressivement et de façon contrôlée l'outil 14 en appui lui aussi sur la surface de la pièce à usiner et de contrôler une bonne répartition de contraintes mesurées par les trois capteurs de contraintes 16a, 16b et 16c. Dans le cas où un déséquilibre est détecté, celui-ci peut être corrigé en modifiant la position de la tête 1 selon les directions X et/ou Y perpendiculaires entre elles et perpendiculaires chacune à la direction Z du référentiel X, Y, Z.

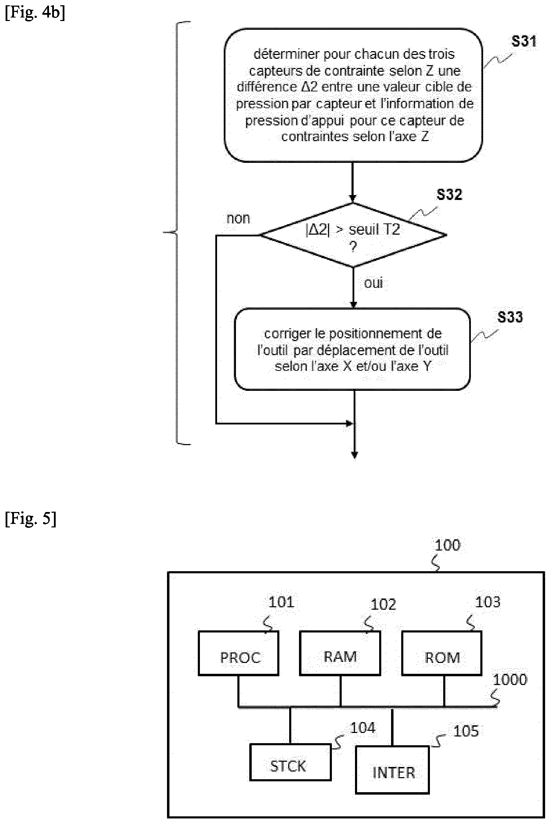

La Fig. 2 représente la tête 1 lorsque le module motorisé 12 portant l'outil 14 est déplacé en translation suivant la liaison glissière 13 de sorte que l'outil 14 soit saillant par rapport à la partie terminale distancielle du corps 10 portant les trois capteurs de contraintes 16a, 16b et 16c. Les détails d'implémentation du robot multiaxe comprenant la tête 1 porte-outil ne sont pas décrits ici dans la mesure où ceux-ci ne participent pas à la compréhension de l'invention. Il convient simplement de noter que les déplacements de la tête 1 sont contrôlés (et donc sa position aussi) sous contrôle d'un dispositif contrôleur 100 (illustré sur la Fig. 5) agissant notamment à partir des informations issues des capteurs 16a, 16b et 16c et de consignes en correspondance d'opérations d'usinage à réaliser, et agissant sur des actionneurs du robot configurés pour générer des mouvements selon les six axes du robot et permettant un positionnement de la tête 1 en référence au référentiel X, Y, Z.

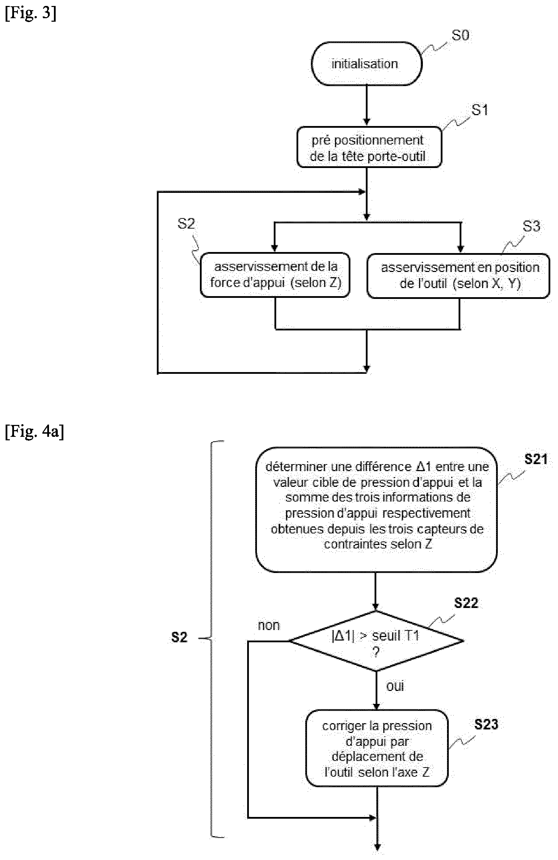

La Fig. 3 est un ordinogramme illustrant un procédé astucieux de positionnement (de contrôle en position) de la tête 1 comprenant deux asservissements de position réalisés simultanément aux fins d'éviter ou de limiter un glissement (ou dérapage) de l'outil 14 sur la surface d'une pièce à usiner, à partir d'informations représentatives de contraintes mécaniques (forces) respectivement mesurées via les trois capteurs de contraintes 16a, 16b et 16c.

Une étape S0 est une étape d'initialisation au terme de laquelle tous les systèmes et dispositifs utiles au contrôle du robot multiaxe comprenant la tête 1 sont normalement initialisés et opérationnels. Lors d'une étape S1, un pré positionnement de la tête 1 en regard d'une pièce à usiner est réalisé de sorte que la partie terminale distale du corps 10 de la tête 1 portant les trois capteurs de contraintes 16a, 16b et 16c est positionnée en regard et à fleur de la pièce à usiner. Selon un mode de réalisation, la tête 1 porte au moins trois modules optiques de type émetteur-récepteur laser configurés chacun pour mesurer une distance avec une grande précision (de l'ordre du micromètre) entre le module et la pièce, et agencés dans un même plan. Selon cet exemple les trois modules optiques de type laser sont reliés au dispositif contrôleur 100 configuré pour opérer des mesures de position relative de la tête 1 en regard d'une pièce à usiner.

Une fois le pré positionnement réalisé à l'étape S1, le procédé de positionnement de la tête 1 comprend une étape S2 de positionnement de la tête 1 visant à opérer un asservissement de position pour calibrer la force d'appui de la tête 1 sur la pièce à usiner (calibration parfois nommée « *clamping* » de l'anglais) réalisée tout en opérant une étape S3 de positionnement de la tête 1 visant à obtenir une bonne répartition (une répartition équilibrée) des contraintes respectivement mesurées par les trois capteurs de contraintes 16a, 16b et 16c, garantissant ainsi une absence de glissement (ou dérapage) de la tête 1 par rapport à la pièce et donc de l'outil 14 par rapport à la surface de la pièce. En effet, des forces de frictions orientées perpendiculairement à la direction Z peuvent entraîner un glissement de la tête porte-outil sur une pièce à usiner, de nature à déséquilibrer l'égalité recherchée des contraintes mécaniques appliquées aux capteurs 16a, 16b et 16c. Astucieusement, un premier asservissement de position de l'outil sur la pièce est réalisé à l'étape S2 afin de réguler la force d'appui et dans le même temps un deuxième asservissement de la position de l'outil est réalisé à l'étape S3, simultanément au premier asservissement, ce qui permet d'éviter tout glissement de l'outil par rapport à la pièce à usiner ou à tout le moins de réduire sensiblement ce risque ou l'amplitude d'un tel phénomène.

La Fig. 4a est un ordinogramme illustrant des détails d'implémentation du premier asservissement opéré lors de l'étape S2 qui se décompose ici en trois étapes S21, S22 et S23.

Lors de l'étape S21, le dispositif contrôleur 100 obtient des informations Se1, Se2 et Se3 respectivement représentatives des contraintes mécaniques appliquées sur les capteurs de contraintes 16a, 16b et 16c selon la direction Z du référentiel X, Y, Z. Le dispositif contrôleur 100 détermine alors une différence $\Delta 1$ entre une valeur cible de pression d'appui (par exemple 100 daN pour une opération de perçage prédéfinie) et la somme $\Sigma Se$ des trois contraintes déterminées à partir des trois informations représentatives de contraintes mécaniques respectivement obtenues depuis les trois capteurs de contraintes 16a, 16b et 16c. Puis le dispositif contrôleur 100 détermine lors d'une étape S22 si la valeur absolue $|\Delta 1|$ est supérieure à une première valeur seuil T1 prédéfinie. Si tel est le cas, alors une correction de la position de la tête 1 est réalisée à l'étape S23 en opérant un mouvement d'avance ou de retrait de la tête 1 par rapport à la pièce selon la direction Z pour augmenter ou réduire la pression d'appui de l'outil 14 sur la pièce à usiner, en cherchant à obtenir une force de référence prédéfinie (par exemple 100 daN). Mais si la valeur absolue de la différence $|\Delta 1|$ n'est pas supérieure à la première valeur seuil prédéfinie, alors la pression d'appui de l'outil 14 sur la surface de la pièce à usiner se situe dans un intervalle de valeurs satisfaisant et aucune correction n'est requise à ce stade.

La Fig. 4b est un ordinogramme illustrant des détails d'implémentation du deuxième asservissement opéré lors de l'étape S3 qui se décompose ici en trois étapes S31, S32 et S33. Lors de l'étape S31, le dispositif contrôleur 100 obtient des informations Se1, Se2 et Se3 respectivement représentatives des contraintes mécaniques appliquées sur les capteurs de contraintes 16a, 16b et 16c selon la direction Z du référentiel X, Y, Z. Le dispositif contrôleur 100 détermine alors, pour chacun des capteurs 16a, 16b et 16c, une différence $\Delta 2$ entre une valeur cible de pression d'appui (par exemple 1/3 d'un valeur cible globale de 100 daN, soit 33,33 daN pour une opération de perçage prédéfinie) ramenée à un capteur et la pression d'appui déterminée pour ce capteur parmi les capteurs 16a, 16b et 16c, à partir des informations représentatives de contraintes mécaniques mesurées par ce capteur et obtenues depuis ce capteur parmi les trois capteurs 16a, 16b et 16c.

Ainsi une différence $\Delta 2_{Se1}$ est déterminée à partir de l'information Se1 en provenance du capteur 16a, une différence $\Delta 2_{Se2}$ est déterminée à partir de l'information Se2 en provenance du capteur 16b et une différence $\Delta 2_{Se3}$ est déterminée à partir de l'information Se3 en provenance du capteur 16c.

Puis le dispositif contrôleur 100 détermine lors d'une étape S32 si la valeur absolue $|\Delta 2|$ pour chacun des capteurs 16a, 16b et 16c est supérieure à une deuxième valeur seuil T2 prédéfinie (soit plus précisément si l'une des différences $\Delta 2_{Se1}$, $\Delta 2_{Se2}$, et $\Delta 2_{Se3}$ en valeur absolue excède la deuxième valeur seuil T2 prédéfinie). Si tel est le cas, alors une correction de la position de la tête 1 est réalisée à l'étape S33 en opérant un mouvement de translation de la tête 1 par rapport à la pièce selon la direction X et ou selon la direction Y pour compenser le déséquilibre des pressions observées sur chacun des trois capteurs 16a, 16b et 16c par la pièce à usiner. Mais si la valeur absolue de la différence $|\Delta 2|$ n'est pas supérieure à la deuxième valeur seuil prédéfinie, et ce pour chacun des trois capteurs, alors l'équilibre des pressions d'appui sur la surface de la pièce à usiner se situe dans un intervalle de valeurs satisfaisant et aucune correction de position n'est requise à ce stade.

Avantageusement, les étapes S2 et S3 opérées simultanément (en parallèle l'une de l'autre) sont exécutées itérativement pour créer le premier asservissement de position de la tête 1 visant à asservir la pression de l'outil sur la pièce à usiner et pour créer dans le même temps le deuxième asservissement de position de la tête 1 visant à asservir un équilibre des contraintes mécaniques appliquées sur chacun des capteurs 16a, 16b et 16c, garantissant ainsi une absence de glissement ou à tout le moins un risque de glissement substantiellement réduit.

Selon un mode de réalisation, la première valeur seuil T1 prédéfinie utilisée à l'étape S22 correspond à une force de 3 kg et la correction de position selon l'axe Z utilisée à l'étape S23 utilise un calcul « proportionnel-intégral » en relation avec les boucles d'asservissement de contrôle des actionneurs du robot.

$$\Delta Z = dt \left[ Pz \left( \Sigma\, FSei - F^* \right) + Iz \int \left( \Sigma\, FSei - F^* \right) dt \right]$$

où Pz est le gain proportionnel selon la direction Z, $\Sigma FSei$ est la somme des contraintes mécaniques Se1, Se2 et Se3, F* est la valeur cible de pression d'appui, Iz est le gain intégral selon la direction Z et dt est le pas de temps du contrôleur.

Selon un mode de réalisation, la deuxième valeur seuil T2 prédéfinie utilisée à l'étape S32 correspond à une force de 1,5 kg et la correction de position réalisée à l'étape S33 est opérée en déplaçant la tête d'une distance $\Delta X$ selon la direction X et d'une distance $\Delta Y$ selon la direction Y avec des valeurs $\Delta X$ et $\Delta Y$ déterminées comme expliqué ci-après :

$\Delta X = dt \left[ Px \left( \cos 30° \left( FSe1 - F^*Se1 \right) - \cos 30° \left( FSe2 - F^*Se2 \right) \right) + Ix \int \left( \cos 30° \left( FSe1 - F^*Se1 \right) - \cos 30° \left( FSe2 - F^*Se2 \right) \right) dt \right]$

$\Delta Y = dt \left[ Py \left( - \sin 30° \left( FSe1 - F^*Se1 \right) - \sin 30° \left( FSe2 - F^*Se2 \right) + \left( FSe3 - F^*Se3 \right) \right) + Iy \int \left( - \sin 30° \left( FSe1 - F^*Se1 \right) - \sin 30° \left( FSe2 - F^*Se2 \right) + \left( FSe3 - F^*Se3 \right) \right) dt \right]$

et où Px, Py sont les gains proportionnels selon les directions X et Y, F*Sei est la valeur cible de pression d'appui par contraintes mécaniques, Ix, Iy sont les gains intégraux, respectivement selon les directions X et Y,

et où $F_{Se1}$, $F_{Se2}$ et $F_{Se3}$ sont des contraintes mécaniques respectivement déterminées à partir des informations Se1, Se2 et Se3, représentatives de contraintes mécaniques respectivement délivrées au dispositif contrôleur 100 par les capteurs 16a, 16b et 16c.

L'utilisation du procédé selon l'invention permet de constater en laboratoire un meilleur équilibrage des forces mesurées sur les capteurs 16a, 16b et 16c autour de la valeur moyenne qu'est la consigne de force d'appui (force de « *clamping* »), ce qui réduit grandement le risque de dérapage de l'outil sur la surface de la pièce à usiner.

La Fig. 5 est un diagramme illustrant un exemple d'architecture interne du dispositif contrôleur 100 du positionnement de la tête 1 porte-outil, selon un mode de réalisation.

Selon l'exemple d'architecture matérielle représenté à la Fig. 5, le dispositif contrôleur 100 comprend alors, reliés par un bus de communication 1000 : un processeur ou CPU (« Central Processing Unit » en anglais) 101 ; une mémoire vive RAM (« Random Access Memory » en anglais) 102 ; une mémoire morte ROM (« Read Only Memory » en anglais) 103 ; une unité de stockage telle qu'un disque dur (ou un lecteur de support de stockage, tel qu'un lecteur de cartes SD (« Secure Digital » en anglais) 104 ; au moins un module d'interfaces 105 permettant au dispositif contrôleur 100 d'interagir avec des dispositifs présents dans le robot multiaxe qui comprend la tête 1 ainsi qu'avec des dispositifs tiers de contrôle du robot, tels que par exemple, des actionneurs du robot ou un module programmable de contrôle des opérations d'usinage de pièces à réaliser par le robot. Avantageusement, le module d'interfaces INTER 105 comprend notamment des ports d'entrée-sorties, des entrées de convertisseurs de type numérique/analogique et de convertisseurs de type analogique/numérique, des sorties contrôlées en modulation de largeur d'impulsion, et plus généralement tous types d'interfaces, y compris de puissance, notamment utiles au contrôle d'un robot industriel multiaxe. En particulier, le module d'interfaces INTER 105 du dispositif contrôleur 100 est configuré pour opérer notamment des fonctions de positionnement de la tête porte-outil d'un robot.

Le processeur 101 est capable d'exécuter des instructions chargées dans la RAM 102 à partir de la ROM 103, d'une mémoire externe (non représentée), d'un support de stockage (tel qu'une carte SD), ou d'un réseau de communication. Lorsque le dispositif 100 est mis sous tension, le processeur 101 est capable de lire depuis la RAM 102 des instructions de code de programme et de les exécuter. Ces instructions forment un programme d'ordinateur causant la mise en oeuvre, par le processeur 101, de tout ou partie d'un procédé décrit en relation avec les Fig. 3, Fig. 4a et Fig. 4b ou de tout ou partie des variantes décrites de ce procédé.

Tout ou partie du procédé décrit en relation avec les Fig. 3, Fig. 4a et Fig. 4b ou ses variantes décrites peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif contrôleur 100 de positionnement de la tête 1 comprend de la circuiterie électronique configurée pour mettre en oeuvre les procédés décrits en relation avec la tête 1 ou le dispositif contrôleur 100. Bien évidemment, le dispositif contrôleur 100 de la position de la tête 1 porte-outil comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties connexes, des entrées d'interruptions, des drivers (ou pilotes) de bus, cette liste étant non exhaustive.

**Revendications**

1. Procédé de positionnement d'une tête (1) porte-outil d'un robot multiaxe, ladite tête (1) porte-outil étant configurée pour porter un outil (14) s'étendant longitudinalement selon une première direction (Z) et ladite tête (1) porte-outil comprenant au moins trois capteurs de contraintes (16a, 16b, 16c) configurés pour délivrer des informations (Sel, Se2, Se3) représentatives de contraintes exercées sur ladite tête (1) selon la direction Z, ledit procédé étant exécuté dans un dispositif contrôleur (100) de positionnement de ladite tête (1), relié auxdits trois capteurs de contraintes (16a, 16b, 16c) et relié à des actionneurs de positionnement dudit robot configurés pour opérer un positionnement de ladite tête (1) selon au moins ladite première direction (Z) et deux autres directions (X, Y) perpendiculaires entre elles et perpendiculaires chacune à ladite première direction (Z), ledit procédé étant **caractérisé en ce qu'**il comprend, exécutées itérativement, les étapes :

   - (S2, S3) obtenir trois premières informations (Sel, Se2, Se3) représentatives de contraintes exercées selon la première direction (Z), obtenues à partir respectivement desdits trois capteurs (16a, 16b, 16c),
   - opérer un premier asservissement (S2) de position de ladite tête (1) porte-outil selon la première direction (Z) à partir desdites trois premières informations (Sel, Se2, Se3) tout en opérant un deuxième asservissement (S3) de la position de ladite tête (1) selon les deux autres directions (X, Y) à partir desdites trois premières informations (Sel, Se2, Se3).

2. Procédé de positionnement d'une tête (1) porte-outil d'un robot multiaxe selon la revendication 1, selon lequel opérer ledit premier asservissement (S2) de position de ladite tête comprend :

   - déterminer (S21) une première différence ($\Delta 1$), entre la somme ($\Sigma Se$) desdites trois premières informations (Sel, Se2, Se3) et une contrainte cible prédéterminée selon la direction Z, et,
   - si (S22) ladite première différence déterminée ($\Delta 1$) est supérieure à une première valeur seuil (T1) prédéfinie, corriger une consigne de positionnement de ladite tête dudit robot selon la première direction (Z) pour réduire ladite première différence ($\Delta 1$),

   et selon lequel opérer ledit deuxième asservissement de position de ladite tête comprend :

   - déterminer des deuxièmes différences ($\Delta 2_{Se1}$, $\Delta 2_{Se2}$, $\Delta 2_{Se3}$), entre la moyenne desdites trois premières informations et chacune desdites premières informations (Se1, Se2, Se3), et,
   - si l'une au moins desdites deuxièmes différences ($\Delta 2_{Se1}$, $\Delta 2_{Se2}$, $\Delta 2_{Se3}$) déterminées est supérieure à une deuxième valeur seuil (T2) prédéfinie, corriger une consigne de positionnement de ladite tête (1) dudit robot selon l'une et/ou l'autre desdites deux autres directions (X, Y) pour réduire ladite ou lesdites deuxièmes différences.

3. Procédé de positionnement d'une tête (1) porte-outil d'un robot multiaxe selon l'une des revendications 1 et 2, le procédé comprenant une étape préalable de positionnement de ladite tête porte-outil en regard et à fleur d'une surface d'une pièce à usiner grâce à aux moins trois modules optiques émetteurs-récepteurs de type laser.

4. Procédé de positionnement d'une tête (1) porte-outil d'un robot multiaxe selon l'une des revendications 1 à 3, le procédé étant adapté à opérer des opérations de perçage de pièces d'équipements aéronautiques par ledit robot multiaxe portant un outil de perçage.

5. Dispositif contrôleur (100) de la position d'une tête porte-outil d'un robot multiaxe, ladite tête (1) porte-outil étant configurée pour porter un outil (14) s'étendant longitudinalement selon une première direction (Z) et ladite tête (1) porte-outil comprenant au moins trois capteurs de contraintes (16a, 16b, 16c) configurés pour délivrer des informations (Sel, Se2, Se3) représentatives de contraintes exercées sur ladite tête (1) selon la première direction (Z), ledit dispositif contrôleur (100) de la position de ladite tête (1) étant relié auxdits trois capteurs de contraintes (16a, 16b, 16c) et étant relié à des actionneurs de positionnement dudit robot configurés pour opérer un positionnement de ladite tête (1) selon au moins ladite première direction (Z) et deux autres directions (X,Y) perpendiculaires entre elles et perpendiculaires chacune à ladite première direction (Z), ledit dispositif contrôleur étant **caractérisé en ce qu'**il comprend de la circuiterie électronique configurée pour :

   - (S2, S3) obtenir trois premières informations représentatives de contraintes exercées selon la première direction (Z), à partir respectivement desdits trois capteurs (16a, 16b, 16c),
   - opérer un premier asservissement (S2) de position de ladite tête (1) porte-outil selon la première direction (Z) à partir desdites trois premières informations (Sel, Se2, Se3) tout en opérant un deuxième asservissement (S3) de la position de ladite tête (1) selon les deux autres directions (X, Y) à partir desdites trois premières informations.

6.  Dispositif contrôleur de positionnement d'une tête (1) porte-outil d'un robot multiaxe selon la revendication 5, dans lequel la circuiterie électronique configurée pour opérer ledit premier asservissement (S2) comprend de la circuiterie électronique configurée pour :

    - déterminer (S21) une première différence ($\Delta$1), entre la somme ($\Sigma$Se) desdites trois premières informations (Sel, Se2, Se3) et une contrainte cible prédéterminée selon la première direction (Z), et pour,
    - si (S22) ladite première différence déterminée ($\Delta$1) est supérieure à une première valeur seuil (T1) prédéfinie, corriger une consigne de positionnement de ladite tête (1) dudit robot selon la première direction (Z) pour réduire ladite première différence ($\Delta$1),

    et dans lequel la circuiterie électronique configurée pour opérer ledit deuxième asservissement de position de ladite tête (1) comprend de la circuiterie électronique configurée pour :

    - déterminer des deuxièmes différences ($\Delta$2Se1, $\Delta$2 Se2, $\Delta$2 Se3), respectivement entre la moyenne (MSe) desdites trois premières informations et chacune desdites premières informations (Sel, Se2, Se3), et pour,
    - si l'une au moins desdites deuxièmes différences ($\Delta2_{Se1}$, $\Delta2_{Se2}$, $\Delta2_{Se3}$) déterminées est supérieure à une deuxième valeur seuil (T2) prédéfinie, corriger une consigne de positionnement de ladite tête (1) dudit robot selon l'une et/ou l'autre desdites deux autres directions (X, Y) pour réduire ladite ou lesdites deuxièmes différences ($\Delta2_{Se1}$, $\Delta2_{Se2}$, $\Delta2_{Se3}$).

7.  Dispositif contrôleur de positionnement d'une tête (1) porte-outil d'un robot multiaxe selon l'une des revendications 5 et 6 comprenant en outre de la circuiterie électronique configurée pour opérer un positionnement préalable de ladite tête (1) porte-outil en regard et à fleur d'une surface cible d'une pièce à usiner grâce à aux moins trois modules optiques émetteurs-récepteurs de type laser.

8.  Dispositif contrôleur (100) de la position d'une tête (1) porte-outil d'un robot multiaxe selon l'une des revendications 5 à 7, le contrôleur étant adapté à positionner ladite tête (1) pour opérer des opérations de perçage de pièces d'équipements aéronautiques par ledit robot multiaxe portant un outil de perçage.

9.  Produit programme d'ordinateur comprenant des instructions de codes de programme pour exécuter les étapes du procédé selon l'une des revendications 1 à 4, lorsque ledit programme est exécuté par un processeur d'un contrôleur de positionnement d'une tête porte-outil de robot multiaxe.

10. Support de stockage comprenant un produit programme d'ordinateur selon la revendication 9.

[Fig. 1]

[Fig. 2]

[Fig. 3]

```
                          ┌─────────────────┐  S0
                          │  initialisation │
                          └─────────────────┘
                                   │
                                   ▼
                          ┌─────────────────┐  S1
                          │ pré positionnement │
                          │ de la tête porte-outil │
                          └─────────────────┘
```

S2
```
  ┌──────────────────────────┐
  │ asservissement de la     │
  │ force d'appui (selon Z)   │
  └──────────────────────────┘
```

S3
```
  ┌──────────────────────────┐
  │ asservissement en position │
  │ de l'outil  (selon X, Y)  │
  └──────────────────────────┘
```

[Fig. 4a]

S21
déterminer une différence Δ1 entre une valeur cible de pression d'appui et la somme des trois informations de pression d'appui respectivement obtenues depuis les trois capteurs de contraintes selon Z

S2

S22
$|\Delta 1| > $ seuil T1 ?

non

oui

S23
corriger la pression d'appui par déplacement de l'outil selon l'axe Z

[Fig. 4b]

```
                        ┌─────────────────────────────┐        S31
                        │  déterminer pour chacun des  │
                        │  trois capteurs de contrainte│
                        │  selon Z une différence Δ2   │
                        │  entre une valeur cible de   │
                        │  pression par capteur et     │
                        │  l'information de pression    │
                        │  d'appui pour ce capteur de  │
                        │  contraintes selon l'axe Z   │
                        └─────────────────────────────┘
                                      │
                                      ▼
      non                      ◇ |Δ2| > seuil T2 ◇       S32
       ◄──────────────────────◇        ?        ◇
       │                        ◇               ◇
       │                              │
       │                             oui
       │                              ▼
       │                  ┌─────────────────────────┐   S33
       │                  │ corriger le positionnement│
       │                  │ de l'outil par déplacement│
       │                  │ de l'outil selon l'axe X  │
       │                  │ et/ou l'axe Y             │
       │                  └─────────────────────────┘
       │                              │
       └──────────────────────────────┤
                                       ▼
```

[Fig. 5]

```
                                   100
          ┌──────────────────────────────────────────────┐
          │   101           102             103           │
          │  ┌──────┐     ┌──────┐       ┌──────┐         │
          │  │ PROC │     │ RAM  │       │ ROM  │         │
          │  └──────┘     └──────┘       └──────┘         │
          │      │           │              │     1000    │
          │  ────┴───────────┴──────────────┴──────       │
          │         │              │                      │
          │     ┌───┴───┐      ┌───┴────┐  104   105      │
          │     │ STCK  │      │ INTER  │                  │
          │     └───────┘      └────────┘                  │
          └──────────────────────────────────────────────┘
```

Europäisches Patentamt

European Patent Office

Office européen des brevets

## RAPPORT DE RECHERCHE EUROPEENNE

**Numéro de la demande**

EP 24 21 5802

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 3 957 436 A1 (LOXIN 2002 SL [ES]) 23 février 2022 (2022-02-23) * figures 11,3 * * alinéa [0019] * * alinéa [0020] * * alinéa [0026] * * alinéa [0023] * * alinéa [0033] *  ----- | 1-10 | INV. G05B19/404 B25J9/10 ADD. B25J9/16 |
| Y | US 2018/361571 A1 (GEORGESON GARY E [US] ET AL) 20 décembre 2018 (2018-12-20) * alinéa [0003] - alinéa [0004] * * alinéa [0071] - alinéa [0072] *  ----- | 1-10 | |

**DOMAINES TECHNIQUES RECHERCHES (IPC)**

G05B
B25J

Le présent rapport a été établi pour toutes les revendications

| Lieu de la recherche | Date d'achèvement de la recherche | Examinateur |
|---|---|---|
| La Haye | 26 janvier 2025 | Antonopoulos, A |

EPO FORM 1503 03.82 (P04C02)

**EP 4 575 686 A1**

## ANNEXE AU RAPPORT DE RECHERCHE EUROPEENNE
## RELATIF A LA DEMANDE DE BREVET EUROPEEN NO.

EP 24 21 5802

26-01-2025

| Document brevet cité au rapport de recherche | | Date de publication | Membre(s) de la famille de brevet(s) | | Date de publication |
|---|---|---|---|---|---|
| EP 3957436 | A1 | 23-02-2022 | CN | 113710417 A | 26-11-2021 |
| | | | EP | 3957436 A1 | 23-02-2022 |
| | | | ES | 2788274 A1 | 20-10-2020 |
| | | | US | 2022214658 A1 | 07-07-2022 |
| | | | WO | 2020212631 A1 | 22-10-2020 |
| US 2018361571 | A1 | 20-12-2018 | CN | 109079842 A | 25-12-2018 |
| | | | EP | 3415285 A2 | 19-12-2018 |
| | | | JP | 7232581 B2 | 03-03-2023 |
| | | | JP | 2019048369 A | 28-03-2019 |
| | | | US | 2018361571 A1 | 20-12-2018 |

EPO FORM P0460

**RÉFÉRENCES CITÉES DANS LA DESCRIPTION**

**Documents brevets cités dans la description**

- EP 3957436 A

- US 2018361571 A